(19) Europäisches Patentamt
European Patent Office
Office européen des brevets

(11) **EP 3 082 356 A1**

(12) **EUROPEAN PATENT APPLICATION**

(43) Date of publication:
**19.10.2016 Bulletin 2016/42**

(51) Int Cl.:
***H04W 12/08*** *(2009.01)* *H04W 12/04* *(2009.01)*
***H04W 8/20*** *(2009.01)*

(21) Application number: **15307159.2**

(22) Date of filing: **29.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.04.2015 EP 15305585**

(71) Applicant: **Gemalto SA**
**92190 Meudon (FR)**

(72) Inventor: **RHELIMI, Alain**
**13881 GEMENOS Cedex (FR)**

(74) Representative: **Scheer, Luc et al**
**Gemalto SA**
**525, Avenue du Pic de Bertagne**
**CS 12023**
**13881 Gémenos Cedex (FR)**

(54) **METHOD TO CHECK AND PROVE THE AUTHENTICITY OF AN EPHEMERAL PUBLIC KEY**

(57) The present invention relates to a method to transfer field party credentials appearing as randomized for preventing any data correlation and enforcing the privacy protection, to check and prove the authenticity of an ephemeral public key (PK.PBL.ECDHE) in a three secure parties (PBL,IDS1,IDS2) environment, while preserving privacy and confidentiality between the parties and within the content parties, the perfect forward secrecy and the mutual authentication between the field party (PBL) and the content party (IDS2), said ephemeral public key (PK.PBL.ECDHE) being produced as part of a field generated ephemeral key pair (SK.PBL.ECDHE, PK.PBL.ECDHE) by a field party (PBL) having to prove its authenticity to a content party (IDS2) before using said ephemeral public key (PK.PBL.ECDHE) to provide a content, said authenticity being relative to a production party (IDS1).

FIG.3

**Description**

## FIELD OF THE INVENTION

The present invention relates to a method to check and prove the authenticity of an ephemeral public key. It more specifically relates to a privacy and confidentiality context in a three secure parties.

More specifically it aims in the check and proof of authenticity of an ephemeral public key produced as part of a field generated ephemeral key pair by a field party. Such a field party is typically a target secure element or a secure enclave within a System On Chip of which it is desirable to remotely modify/grant rights. It is applicable to systems implementing embedded or removable secure elements/enclaves having to prove its authenticity to a content provider party before the usage of said ephemeral public key in a content provision context. The authenticity is relative to an authentic production party, named production party in the following, which is the third party of the environment of the invention. The production party is a secure entity linked to an original equipment manufacturer (OEM) and able to authenticate the field party, typically an Hardware Secure Module (HSM). The content provider party, named content party in the following, is typically a secure part of a MNO portal wishing to load specific secure contents to the field party, typically an HSM.

## BACKGROUND OF THE INVENTION

With the accelerated growth of the connected devices and considering the constraints and requirements of the device makers, the need has emerged for a Subscription Manager that is adapted to Consumer Electronics such as Smartphones, tablets of other type of connected devices. In a more generic way, the miniaturization of the devices, especially about the wearable devices, lead the OEM device maker to favour the withdrawn of a physical connector accepting a removable Secure Element as a Universal Integrated Circuit Card (UICC). Namely, an embedded Secure Element is the translation of the above requirements where the Secure Element is no longer removable and closely embedded in the OEM device. A eUICC is an embedded SE (eSE) supporting a mobile communication oriented firmware as known as Image/Profile Image (OS and custom files). Nevertheless the same embedded SE or integrated SE (i.e. iSE: a secure enclave within a System On Chip) may host numerous firmwares related to different markets (eg. Banking applications). Then the needs for remotely loading a secure content into such of secure element/enclave are transversal and are addressed with a universal technology.

A possible solution would be to use a Primary Boot Loader also designated in this description with its acronym PBL. The PBL behaves just like an Secure Element (SE) logical connector supporting the installation of a full secure firmware (aka. Image/Profile Image) on an eSE chip. It enables the full upload of an Image on this dedicated chip that has been properly certified. Such upload is performed in a time short enough to match the requirement of a proper End User experience, while preserving the necessary level of security that has been obtained until now with the smart card technology, bundling strongly the software (mainly the operating system and profile) with the hardware.

The PBL-based model provides several advantages.

Within the Mobile Phone environment, one advantage is that there is no need to standardize a UICC operating system (OS). The Mobile Network Operator (MNO) will continue enjoying the level of flexibility they need in terms of Subscriber Identity Module (SIM) OS features diversity, they will keep control access to their network, avoid serious disruptions for their IT systems, and will benefit from new possible use cases.

Another advantage is that the Original Equipment Manufacturer (OEM) will be able to also use embedded chips, in the cases where the removable card as a SIM card connector becomes an excessive physical constraints (e.g. new connected devices), with the safety and flexibility provided by the fact the entire secure Image can be uploaded in case of any issue of the embedded software (parameter issue, security weakness, runtime difficulty, ...).

Further, the End User will be in control of the choice for connectivity / subscription/applications, with an easier journey for obtaining connectivity or services on any new device, which will boost usage of both the devices capabilities and the service provider (e.g. MNO's) networks.

Additionally, full remote maintenance is possible as the entire Image (applications, customer credentials and OS included) can be remotely changed. This not only provides a much safer context for the OEM, it also feeds continuous innovation and improvements during the UICC/SE life cycle. The service provider (e.g. MNO, Bank,..) can continue defining their own secure applications and specific OS optimization, without any compromise.

Using this technology allows assuring interoperability and each UICC/SE vendor can continue loading their own images on the deployed chips, in collaboration with the service providers and OEMs.

Service Provider may provide access to their network using a PBL based system solution. Further, the Service Provider as the MNO may provide the end users with subsidized device with connectivity services. In that case, the boot loader may be locked in order to avoid the end user to change its subscription by loading a Profile Image different from the one provided by the business owner (the MNO) which has subsidized its device. Method and related equipments to modify the right attributed to a secure element associated to a device, for example a subsidized device needs to be based on reliable cryptography, and especially there is a need to provide method to enable the use of ephemeral keys, while insuring the authenticity of these keys.

## SUMMARY OF THE INVENTION

The present invention is defined, in its broadest sense, as a method to transfer field party credentials appearing as randomized for preventing any data correlation and enforcing the privacy protection, to check and prove the authenticity of an ephemeral public key in a three secure parties environment, while preserving privacy, confidentiality between the parties and within the parties, and while insuring perfect forward secrecy and a mutual authentication between a field party and a content party, said ephemeral public key being produced as part of a field generated ephemeral key pair by a field party having to prove its authenticity to a content party before using said ephemeral public key to provide a content, said authenticity being relative to a production party, said field party and said content party having each a pair of public/secret static keys for signature an associated static signature certificate for verification, said method comprising the following steps, for the production party having a pair of static production key agreement keys and a static production key agreement certificate:

- receiving, from field party, field party's credentials comprising a cryptogram including the signature static certificate of the field party encrypted using an ephemeral credential session key derived from the production static certificate for key agreement and the secret ephemeral key and a field authentication token comprising a signature using the static secret key of the field party of data comprising at least the ephemeral public key of the field party, a transaction identifier of the transaction produced by the field party and a content identifier of the content to be loaded produced by the content party,
- deriving an ephemeral credential session key using the received field authentication token and the production key agreement secret key,
- decrypting the credential cryptogram using the derived credential session key to get the static signature certificate of the field party,
- verifying the authentication token using the signature certificate of the field party,
- transferring, after field party's credentials check, at least said authenticated field authentication token to the content party for further content provisioning.

The use of the encryption of the static field party certificate enables to offer privacy to the field party. The invention enables to insure the content provider party that the authentication token is authentic while ephemeral. The decryption sequence is original as decryption is performed prior to the verification while the contrary is the common practice.

According to an advantageous feature, the method further comprises a step of, for said production party, transmitting to the content party, a cross-signature of the authentication token, by using its static signature secret key, and its certificate with the authentication token.

The use of a signature by the production party brings the evidence to the content provider that the ephemeral field party's public key is transmitted from the production party after authenticity check. Cross-signing the ephemeral key to be authenticated gives thus an additional authenticity level.

Advantageously, all derivations are done in key agreement domain of the production key agreement certificate.

Such a feature enables the three parties to have a common language in terms of key derivation and encryption/decryption.

According to an advantageous embodiment, the field party dully identified by a Part Number during its manufacturing having a signature certificate of the part number, the field party's credentials further comprise the part number signature certificate for authenticity verification of the static signature certificate of the field party by the production party.

In this embodiment, an additional level of authenticity check is added by checking the part number certificate as stored in the field party on the production party's side.

According to a preferred embodiment, said production party having preliminary received a certificate issuer certificate, the method further comprises the step of verifying the authenticity of the part number signature certificate signed by a certificate issuer signature secret key using said certificate issuer certificate.

This embodiment enables the verification of a chain of certificates according to a certificate issuer certificate loaded at manufacturing time in the field party.

According to an advantageous feature, validity information for a content to be provided to the field party having to be applied, such validity information are encrypted using the credential session key in a validity information cryptogram to be transferred to the content party in order for it to forward it to the field party with the content.

This feature enables to insure the content party not to corrupt or modify the validity information as ordered by the production party. It enables a control on the validity information (i.e. timestamp) on the field party by the production party while the production party is only an intermediate entity acting only as a connector between the field and the content parties.

According to a particular feature, the method comprises, for the field party, the preliminary steps of receiving a key agreement certificate from another party and of verifying the neutrality of the other party from which it has received it.

The production party acts as a generic and neutral entity providing the access to a no less generic and neutral virtual connector as its equivalent physical connector. The verification of the neutrality of the production party can be done by adding a tag (i.e. defined data element obeying to a convention) in the certificates as the production party certificates and for the field party accepting a key agreement certificate only from a production party, thus only from a neutral party, not linked to content to be loaded. The tagging of the certificates is dully controlled and assigned by an upper root authority, the certificate issuer (CI) supervising the role of each element of its ecosystem.

According to an advantageous feature, the method further comprises a step of, for said production party, providing means as a tag within its key agreement certificate allowing the field party to verify it as an authentic production party.

This enables to insure the field party that it is in relation with a trusted production party.

According to another advantageous feature, the method further comprises a step of, for said content party, providing means as a tag within its static verification certificate allowing the field party to verify it as an authentic content party.

This enables to insure the field party that it is in relation with a trusted content party.

According to one particular embodiment, the method comprises the following preliminary steps:

- for the production party, transferring to the field party the static production key agreement certificate encapsulating the static production key agreement public key,
- for the field party:

  - deriving an ephemeral credential session key using the received production static certificate for key agreement and the secret ephemeral key,
  - encrypting the signature static certificate of the field party with the credential session key in a credential cryptogram,
  - generating a field authentication token, said field authentication token comprising a signature using the static secret key of the field party of data comprising at least the ephemeral public key of the field party, a transaction identifier of the transaction produced by the field party and a content identifier of the content to be loaded produced by the content party, said authentication token being transferred with the credential cryptogram as field party's credentials to the production party.

The preparation of credentials according to this embodiment is a simple way to enable the method of the invention to be implemented in a production party.

According to another embodiment of the invention, the method comprises the following steps of use of the ephemeral public key:

- for the production party, transferring, after field party's credentials check, at least said field authentication token to the content party,
- for the content party:

  - generating an ephemeral pair of content keys,
  - deriving an ephemeral provision session key using the received field authentication token and the ephemeral secret content key,
  - using the ephemeral provision session key to encrypt a content to be loaded in the field party,
  - generating a content authentication token comprising a signature using the static secret key of the content party of data comprising at least the ephemeral content public key and the transaction identifier,
  - sending the encrypted content and the content authentication token to the field party,
  - for the field party:

    - deriving an ephemeral provision session key using the content authentication token and the ephemeral secret key,
    - decrypting the content using the locally derived provision session key.

With the invention the content provider party does not know its target but only knows that it received an authentic ephemeral token from an authentic field party. With the invention, the privacy of the field party is protected even within the content party.

According to a particular feature of the invention, a business locker being active, the method further comprises, for the content party, the step of generating a further cryptogram by encrypting a business locker certificate comprising a policy control function using content session key.

This feature enables to communicate a policy control function to the field party for it to use it to establish the functioning of the field party. It is necessary for the field party to decrypt the policy control function using the content session key.

Also, the installation of the policy control function can be conditioned by the validity information as besides received and decrypted in the field party using the credential session key.

The present invention also relates to a production's party device intended to check and prove the authenticity of an ephemeral public key in a three secure parties environment, while preserving privacy and confidentiality between the parties according to a method according to the invention, said ephemeral public key being produced as part of a field generated ephemeral key pair by a field party having to prove its authenticity to a content party before using said ephemeral public key to provide a content, said authenticity being relative to a production party, said content party having a memory to store at least a pair of public/secret static keys for signature an associated static signature certificate for verification and a pair of static production key agreement keys and a static production key agreement certificate, said production party's device comprising:

- a communication unit to receive, from field party, field party's credentials comprising a cryptogram including the signature static certificate of the field party encrypted using an ephemeral credential session key derived from the production static certificate for key agreement and the secret ephemeral key and a field authentication token comprising a signature using the static secret key of the field party of data comprising at least the ephemeral public key of the field party, a transaction identifier of the transaction produced by the field party and a content identifier of the content to be loaded produced by the content party, said communication unit being also to transfer, after field party's credentials check, at least said authenticated field authentication token to the content party for further content provisioning,
- a derivation module to derive an ephemeral credential session key using the received field authentication token and the production key agreement secret key,
- an encryption/decryption module to decrypt the credential cryptogram using the derived credential session key to get the static signature certificate of the field party,
- a verification module to verify the authentication token using the signature certificate of the field party.

With the invention, the privacy is guaranteed even within the servers hosting the production party and the content party and that even within the equipments certified at the highest level of security (e.g. HSM). Advantageously the production's party device is a hardware secure module.

The invention also relates to a field party's device intended to produce an ephemeral public key as part of a field generated ephemeral key pair and to perform the specific steps as performed by the field party in the method of the invention, said ephemeral public key having to be checked and authenticated according to a method of the invention in a three secure parties environment, while preserving privacy and confidentiality between the parties, authenticity having to be proved to a content party before using said ephemeral public key to provide a content, said authenticity being relative to a production party (IDS1), said field party's device comprising:

- a memory to store a pair of public/secret static keys for signature an associated static signature certificate for verification,
- a key generator to generate the field generated ephemeral key pair
- a signature module to produce a field authentication token, said field authentication token comprising a signature using the static secret key of the field party of data comprising at least the ephemeral public key of the field party, a transaction identifier of the transaction produced by the field party and a content identifier of the content to be loaded produced by the content party,
- a derivation module to derive an ephemeral credential session key using the received production static certificate for key agreement and the secret ephemeral key,
- an encryption/decryption module to encrypt the signature static certificate of the field party with the credential session key in a credential cryptogram,
- communication unit to transfer the field authentication token with the credential cryptogram as field party's credentials to the production party.

Advantageously, the field party's device is an embedded secure element (eSE) or a trusted execution environment (TEE) or an integrated Secure Element or an integrated secure enclave within a System On Chip.

Such a trusted execution environment TEE is typically a secure enclave or other kinds of secure software environment.

According to an embodiment of the invention, the field party's device is such that its derivation module is further adapted to derive an ephemeral provision session key using the content authentication token and the ephemeral secret key, and its decryption/encryption module is further adapted to decrypt the content using the locally derived provision session key.

The invention at last relates to a content party's device intended to use a field party's generated ephemeral public key for content provision by performing the specific steps as performed by the field party in the method of the invention, said ephemeral public key having being checked and authenticated by a production party in a three secure parties environment, while preserving privacy and confidentiality between the parties, said content party's device comprising:

- a memory to store a pair of public/secret static keys for signature an associated static signature certificate for verification,
- a communication unit to receive a field authentication token from the production party and to provide encrypted content to the field party,
- a key generator to generate a content ephemeral key pair,
- a derivation module to derive an ephemeral provision session key using the received field authentication token and the ephemeral content secret key,
- an encryption/decryption module to use the ephemeral provision session key to encrypt a content to be loaded in the field party,
- a signature module to generate a content authentication token comprising a signature using the static secret key of the content party of data comprising at least the ephemeral content public key and the transaction identifier.

Advantageously, the content party's device is a hardware secure module.

Numerous direct advantages of the invention related to the split between the production and the content parties are:

- The production party authenticating the field party token (ATK.PBL.ECDHE) has no means for deducing the derived key $KS2^6$ used for encrypting a content or the keys encrypting the content,
- The servers hosting the content and the production parties can be different and located in different places at different time,
- The role of the content and the production parties are indisputable and their liability defined,
- The content party has no means for correlating any other content parties using the same field party: non traceability and privacy by design supports,
- The ecosystem can be distributed, then a content party can be connected to multiple production party and vice-versa.

To the accomplishment of the foregoing and related ends, one or more embodiments comprise the features hereinafter fully described and particularly pointed out in the claims.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 represents the three parties environment where the invention finds its application;
- Figure 2 shows a flowchart of the method of the invention as implemented in a production party;
- Figure 3 shows a time sequence diagram of the steps of the invention and exchanges between the three parties ; and
- Figure 4 is an overview of the whole method of the invention;
- Figure 5 is an overview of the data processing from the content party to the field party.

## DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

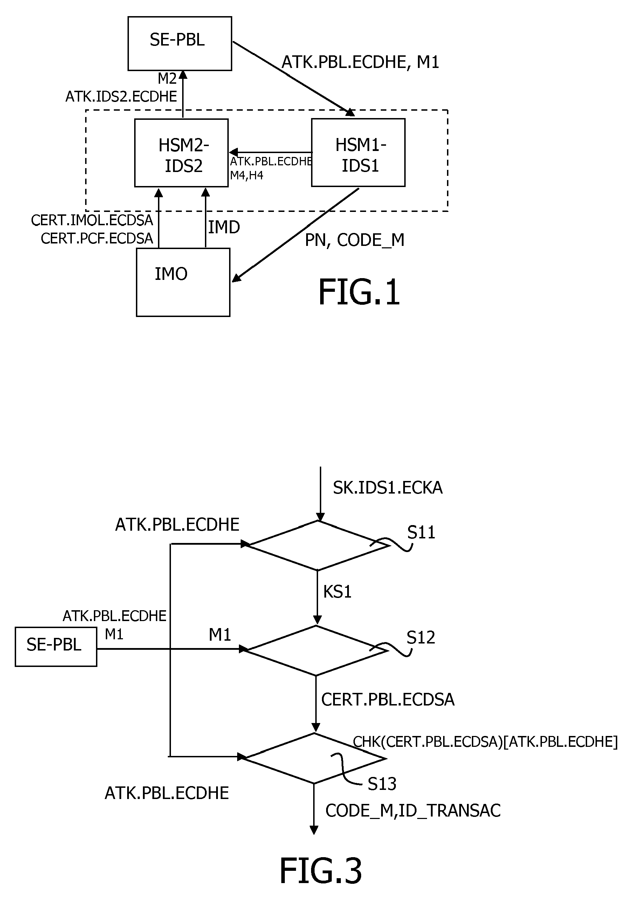

Figure 1 schematically shows a three party's environment where the invention is advantageously implemented. This environment comprises a field party SE-PBL. This field party SE-PBL is typically an embedded secure element, and integrated Secure Element, a SIM card, a secure enclave, a trusted execution environment, a secure user device or any local entity delivered by a production party. It includes a Primary Boot Loader PBL able to receive a secure content to configure the field party.

The production party is illustrated on figure 1 by a Hardware Secure Module HSM1-IDS1. This HSM1-IDS1 is the entity which implements the main part of the invention relative to the authentication of the field party SE-PBL in relation with a content party represented by another HSM HSM2-IDS2.

It is here noted that the two HSM can be supported in a single machine or can be merged in a single HSM or distributed on two HSM on different machines.

However the invention addresses the situation where the two parties of production and of content provisioning are independent and wish not to share data.

According to the invention, the field party SE-PBL provides its credentials via any interface, e.g. a MNO portal, to the HSM1 operating within an Image Delivery Server IDS1. The credentials include a field authentication token ATK.PBL.ECDHE generated by the field party SE-PBL and a cryptogram M1,H1. Those credentials are checked by the production HSM1-IDS1 according to the invention and the authentication token ATK.PBL.ECDHE is forwarded to the content party HSM2-IDS2. The two HSM1-IDS1 and HSM2-IDS2 are in relation with an Image Owner IMO able to provide an image and certificates to HSM2-IDS2 for it to provision the image on the field party SE-PBL.

The following notations are used in the document: ECC for Elliptic Curve Cryptography, ECDHE for Elliptic Curve Diffie-Hellman Ephemeral, ECDSA for Elliptic Curve Digital Signature Algorithm, ECKA for Elliptic Curve Key Agreement, CERT.X.ECDSA for ECDSA static certificate of X, SK.X.ECDSA for ECDSA private key of X for signature, PK.X.ECDSA for ECDSA public key of X for signature, SK.X.ECDHE for ECDHE private key of X (ephemeral key), ATK.X.ECDHE for ECDHE Authentication Token (dynamic certificate of X for key agreement), CERT.X.ECKA for static certificate of X for key agreement, SK.X.ECKA for ECKA private key of X for key agreement, PK.X.ECKA for ECKA public key of X for key agreement, PK.X.ECDHE for ECDHE public key of X (ephemeral key).

Signature operations can be performed:

CERT.X.ECDSA = SIGN(SK.Y.ECDSA)[PK.X.ECDSA,X0,X1,X2,X3...] is the signature of PK.X.ECDSA,X0,X1,X2,X3 where X0, X1, X2, X3 are optional values to sign with the key SK.Y.ECDSA. Authentication tokens are calculated on a similar basis as follows:

$$\text{ATK.X.ECDHE} = \text{SIGN(SK.Y.ECDSA)[PK.X.ECDHE,X0,X1,X2,X3...]}$$

Verification operations can also be performed as VERIFY(CERT.Y.ECDSA)[ ATK.X.ECDHE] verifies ATK.X.ECDHE (signed by SK.Y.ECDSA) with the certificate CERT.Y.ECDSA (hosting the PK.Y.ECDSA) and returns a Boolean (TRUE when successful).

Derivation operations are available as follows:

$$\text{KSXY}^N = \text{DERIV(SK.X.Z)[CERT.Y.W]}$$

$$\text{KSXY}^N = \text{DERIV(SK.X.Z)[PK.Y.W]}$$

And $\text{KSYX}^N = \text{KSXY}^N$ where Z is ECKA or ECDHE and W is ECKA or ECDHE.

X and Y are the parties performing a key agreement as PBL, IDS1 or IDS2.

$\text{KSXY}^N$ is a matrix of N shared secret key(s) and SK.X.Z is a static or ephemeral private key and CERT.Y.W is a static certificate or a static or ephemeral public key.

It is here noted that the ephemeral session keys as generated by derivation have several levels resulting from the derivation according to the principle of the ECC. Those levels are not differentiated in the present description for simplification reasons.

The function $KS^N=DERIVE(X)[Y]$ thus allows the computation of a shared secret key Ks from the private key X and a public key Y within a certificate or an authentication token.

The derivation function starts, by the computation of a shared secret: shared Secret ShS = El-GAMAL (X, Y) as defined in Federal Information Processing Standards Publication 180-3 (FIPS PUB 180-3) Secure Hash Standard (SHS), 2008

From the shared secret ShS, the matrix of shared keys are computed. For example, the KDF-128 is a X9.63 Key Derivation Function in ANSI X9.63. Public Key Cryptography for the Financial Services Industry: Key Agreement and Key Transport Using Elliptic Curve Cryptography, 2011 generating a matrix of N x 128 bit derived keys $_K{}^N$.

$$Ki^N = KDF\text{-}128(ShS,I,SI) \text{ with } i = 1 \text{ to } N$$

Where I counter value between 1 to N, SI the Shared Info as SI= N‖key type ‖ 128.

The encryption and the decryption of data is a symmetrical function based on the eCGM-128 algorithm (enhanced Counter Galois Mode): MDST, HCHECK = eCGM-AES128 (K, IV, EIV)[ MSRC] where K is a 128 bit Encrypting/Decrypting and integrity keys, IV is a 128 bit Initial Value Integrity check, MSRC is a Message stream to encrypt/decrypt. The length of the message shall be a multiple of 128 bit block padded with 'FF'. EIV is a 128 bit Initial Value Encrypting Key, MDST is an Encrypted/decrypted Message stream. The length of the encrypted message is the same than the MSRC message. HCHECK is a 128 bit Integrity check result. It is implicit of checking the integrity check after each decrypting of an encrypted message for detecting any data corruption and the integrity check is done on the clear text. All keys and initial values are derived from the key derivation function as follow: K = K1 = KDF-128 (ShS, 1, SI), IV = K2 = KDF-128 (ShS, 2, SI), EIV = K3 = KDF-128 (ShS, 3, SI).

Consequently the generic notation as MDST, HCHECK = ENCRYPT ($KS^3$)[MSRC] ,where $KS^3$ is a matrix of 3 elements, targeting MDST, HCHECK = eCGM-128 (K, IV, EIV)[MSRC] is MDST, HCHECK = eCGM-128 (KS[1], KS[2], KS[3])[MSRC].

The generic notation as MSRC, HCHECK = DECRYPT ($KS^3$)[MDST], where $KS^3$ is a matrix of 3 elements, targeting MSRC, HCHECK = eCGM-128 (K, IV, EIV)[ MDST] is MSRC, HCHECK = eCGM-128 (KS[1], KS[2], KS[3])[ MDST].

During operations, the initial keys are advantageously derived every X (eg.16) blocks. The eCGM algorithm takes the advantage against the usual CGM to perform the encryption/decryption and the integrity check computation/verification in a single pass and provides a significant gain of performance. The preferred embodiment requires three keys for running the eCGM-128 algorithm, nevertheless other algorithms providing the same requirements (encryption/decryption and integrity check) may require different number of keys or may be ordered differently the keys for performing the operations and that leads to simple convention without impacting or weaken the invention.

The embodiment of the invention as disclosed is a protocol based on the ECC 256 bit using the ECC domain of the IDS1 server. As well the derived keys length of 128 bits for encryption/decryption can be extended (e.g. 256 bits).

The production party HSM1-IDS1 has the following long terms cryptographic material available: CERT.IDS1.ECDSA signed by SK.CI.ECDSA, SK.IDS1.ECDSA, PK.IDS1.ECDSA, CERT.IDS1.ECKA signed by SK.CI.ECDSA, SK.IDS1.ECKA, PK.IDS1.ECKA. It further has advantageously CERT.CI.ECDSA.

The content party HSM2-IDS2 has the following long terms cryptographic material available: CERT.IDS2.ECDSA signed by SK.CI.ECDSA, SK.IDS2.ECDSA, PK.IDS2.ECDSA.

The field party SE-PBL has the following cryptographic material available: CERT.PBL.ECDSA, SK.PBL.ECDSA, PK.PBL.ECDSA and advantageously CERT.PN.ECDSA and CERT.CI.ECDSA where CERT.PBL.ECDSA is signed by the static private key SK.PN.ECDSA associated CERT.PN.ECDSA hosting the public key PK.PN.ECDSA and CERT.PN.ECDSA is signed by SK.CI.ECDSA associated to CERT.CI.ECDSA hosting PK.CI.ECDSA

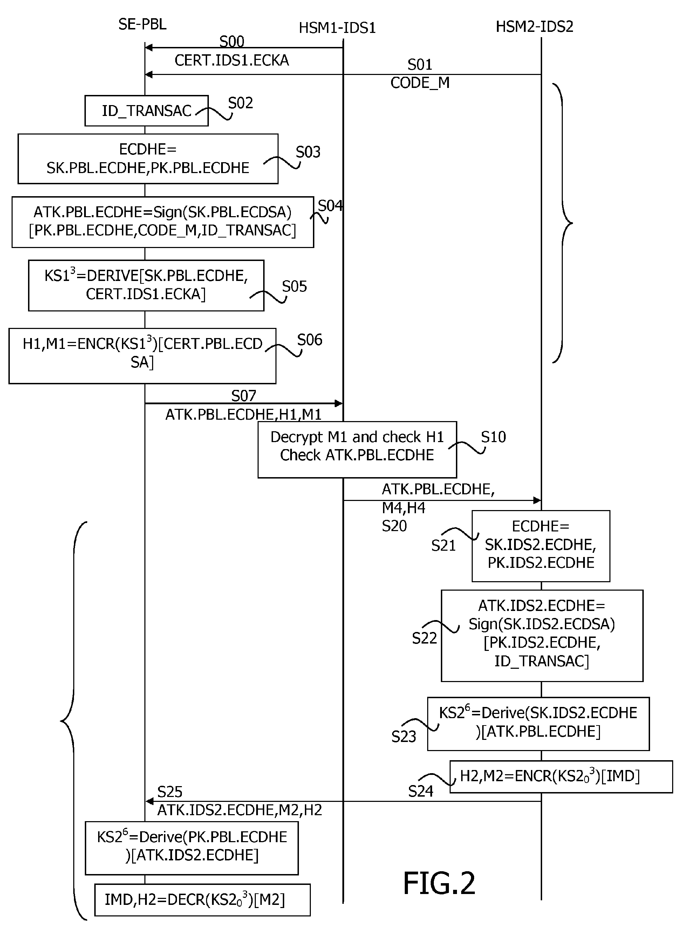

Figure 2 is a flowchart illustrating the invention as performed in the HSM1-IDS1 server. The server HSM1-IDS1 has the following cryptographic material:

- CERT.IDS1.ECKA = SIGN(SK.CI.ECDSA)[PK.IDS1.ECKA] which is the certificate as provided by a certificate issuer CI for a production key agreement key pair (PK.IDS1.ECKA,SK.IDS1.ECKA),
- (PK.IDS1.ECKA,SK.IDS1.ECKA) which is the static production key agreement private key pair,
- advantageously it also has a Certificate Issuer CI root CERT.CI.ECDSA.

The certificate issuer (CI) root enables the IDS1 to check any data signed by the certificate issuer CI.

According to the invention the IDS1 receives credentials from a field party SE-PBL. Those credentials comprise at least a field authentication token and a cryptogram which have been previously prepared by the field party.

This preparation is illustrated on figure 3. The preparation is triggered in a step S01 by the reception by the field party SE-PBL from the content party side a code CODE_M allowing the content party IDS2 to retrieve a record for generating an image. This code enables to identify the content to be loaded in the field party SE-PBL.

Thus the field party SE-PBL performs a credential preparation after reception from the content party, typically from an MNO portal, of the CODE_M initiating a transaction. First the field party generates a transaction number ID_TRANSAC in a step S02.

The field party then generates in a step S03 a pair of ephemeral keys (SK.PBL.ECDHE,PK.PBL.ECDHE) and uses these keys in a step S04 to produce a field authentication token ATK.PBL.ECDHE= SIGN(SK.PBL.ECDSA)[PK.PBL.ECDHE,ID_TRANSAC,CODE_M,UUIDL] where CODE_M is the code allowing the IDS2 to retrieve the record for generating the image, UUIDL is optional and is an UUID of a Business locker if any, ID_TRANSAC is the transaction number issued by the field party PBL.

The preparation of transaction operations necessitates that a key agreement certificate CERT.IDS1.ECKA has been previously received in a step S00 by the field party in order to generate the ECC ephemeral keys in a same ECC domain.

Transaction operations are performed after reception of the code CODE_M by any means, implicitly for subsidized Original Equipment Manufacturer (OEM) device and explicitly for a non subsidized OEM device, e.g. using Push server, a QR code, a NFC NDEF (NFC Forum).

Advantageously, the key agreement certificate is verified using a certificate issuer CI certificate CERT.CI.ECDSA preliminary loaded in the field party PBL by the OEM: VERIFY(CERT.CI.ECDSA)[CERT.IDS1.ECKA].

A credential session key $KS1^3$ is then obtained in a step S05 by derivation in the key agreement domain from the ephemeral secret key SK.PBL.ECDHE and the production static certificate for key agreement CERT.IDS1.ECKA: $KS1^3$=DERIVE(SK.PBL.ECDHE)[CERT.IDS1.ECKA]

The field party also prepares in a step S06 a cryptogram M1 which is the encryption of the static signature certificate of the field party CERT.PBL.ECDSA by using the credential session key $KS1^3$.

Credentials of the field party includes the field authentication token ATK.PBL.ECDHE, the cryptogram M1 and advantageously an integrity check H1 of M1 by using $KS1^3$: M1, H1 =ENCRYPT($KS1^3$)[CERT.PBL.ECDSA] and a part number signature certificate CERT.PN.ECDSA for the part number of the field party manufacturer to be further authenticated.

The field party PBL stores a session indexed by ID_TRANSAC and having as content at least: the secret ephemeral key SK.PBL.ECDHE, a status tag STATE (pending) and the credential session key $KS1^3$. SK.PBLECDHE is deleted once the content has been decrypted and loaded in the field party SE-PBL. The PBL thus manages initial parameter indexed by using ID_TRANSAC in a persistent PBL session memory area. The session is thus persistent in non volatile memory by using a circular buffer storage and is referenced by using ID_TRANSAC.

It is here noted that, depending on the implementation and nature of the field party (secure element, secure enclave), the non volatile memory can be deported in a memory storage external from the strictly speaking secure element or enclave encrypted by keys known from the secure element or secure enclave. It is particularly useful in case of a secure enclave in a System On Chip.

Credentials are transmitted to the production party HSM1-IDS1 in a step S07.

Credentials verification is then performed in a step S10. This verification is illustrated in figure 3 which describes the core of the invention. It comprises a step S11 of locally, in the production party, deriving a credential session key $KS1^3$ from the key agreement secret key SK.IDS.ECKA and the received field authentication token ATK.PBL.ECDHE.

The obtained credential session key $KS1^3$is then used in a step S12 to decrypt the received cryptogram M1 and get the field party signature certificate: CERT.PBL.ECDSA, H1=DECRYPT($KS1^3$)[M1].

Then in a step S13 field authentication token ATK.PBL.ECDHE is verified using the decrypted field party's signature certificate CERT.PBL.ECDSA: VERIFY(CERT.PBL.ECDSA)[ATK.PBL.ECDHE]

It is here noted that the production party does not necessarily belong to the OEM of the field party but is in a trust relationship with a certificate authority as well as the OEM is. Cryptographic material to test the authenticity of the field party is thus provided to the production party once the field party as manufactured by the OEM is certified. Typically a part number PN is associated to any product dully certified by the certificate authority.

When a part number signature certificate CERT.PN.ECDSA is present in the credentials, which corresponds to the preferred embodiment, it is verified by the production party HSM1-IDS1 using a certificate issuer certificate CERT.CI.ECDSA: VERIFY(CERT.CI.ECDSA)[CERT.PN.ECDSA].

Also the production party advantageously verifies the decrypted field party's signature certificate CERT.PBL.ECDSA using a corresponding part number certificate CERT.PN.ECDSA previously received: VERIFY(CERT.PN.ECDSA)[CERT.PBL.ECDSA].

The field authentication token ATK.PBL.ECDHE is thus verified using a decrypted certificate and, in the preferred embodiment, the field party's certificate as decrypted is further verified using certified cryptographic material provided to the production party.

The content party HSM2-IDS2 can further filter the field party's credentials thanks CODE_M, UUID of the business locker and ID_TRANSAC which are freely readable from ATK.PBL.ECDHE.

Then, in case validity information for a content to be provided to the field party has to be applied, such validity information can be encrypted using the credential session key in a cryptogram M4. For example the validity information is a time stamp and the cryptogram is M4,H4 = ENCRYPT($KS1^3$)[TIME_STAMP]. M4 is the encrypted time stamp of the transaction and shall be securely synchronized from a TSA (a.k.a Time Stamping Authority) within a trusted time stamping system. As $KS1^3$ is unknown by the content party, then the time-stamp cannot be modified by the content party. Advantageously, further, the ATK.PBL.ECDHE is counter signed by the HSM1 to ensure the delegation of the authenticity of the field party's credentials by the production party.

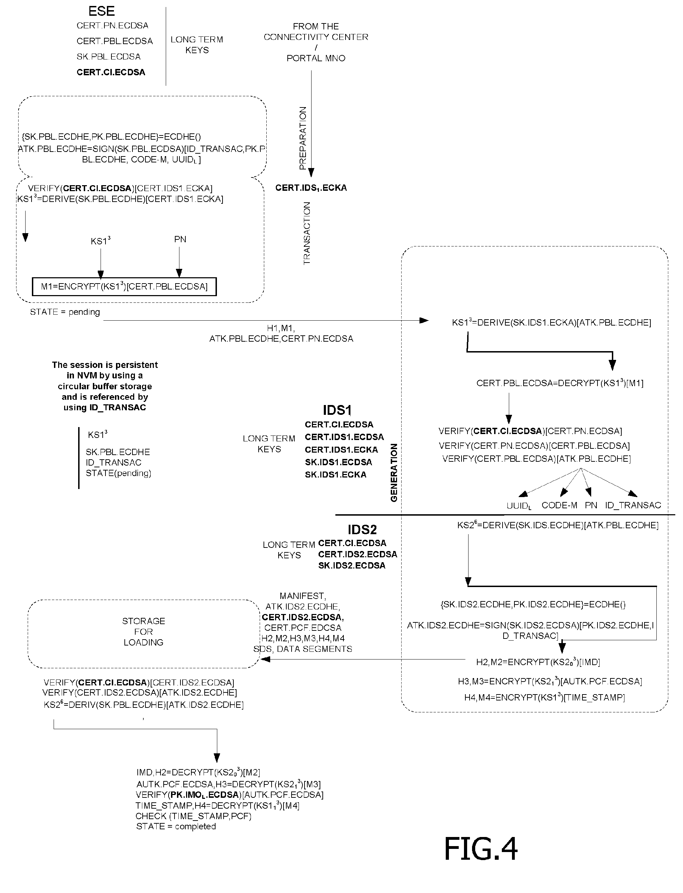

As shown on figure 1 and 4, the field authentication token ATK.PBL.ECDHE is then transferred to the content party HSM2-IDS2 with, when required, the message M4,H4 comprising a time stamp of the field party credentials use. This step S20 is shown on figure 4.

Then, generation operations are performed on authentic request from the Image Owner IMO at the content party HSM2.IDS2.

In a step S21, content ephemeral pair of keys is generated: SK.IDS2.ECDHE,PK.IDS2.ECDHE = ECDHE().

A content authentication token is then generated in a step S22 from at least the ephemeral content public key PK.IDS2.ECDHE and the transaction number ID_TRANSAC using the content signature secret key SK.IDS2.ECDSA: ATK.IDS2.ECDHE=SIGN(SK.IDS2.ECDSA)[PK.IDS2.ECDHE,ID_TRANSAC].

Then an ephemeral provision session key $KS2^6$ is derived in a step S23 from the received field authentication token and the ephemeral content secret key: $KS2^6$=DERIVE(SK.IDS2.ECDHE)[ATK.PBL.ECDHE]. $KS2^6$ is a set of 6 keys grouped in two sets $KS2_0^3$ and $KS1^3$ of 3 keys each.

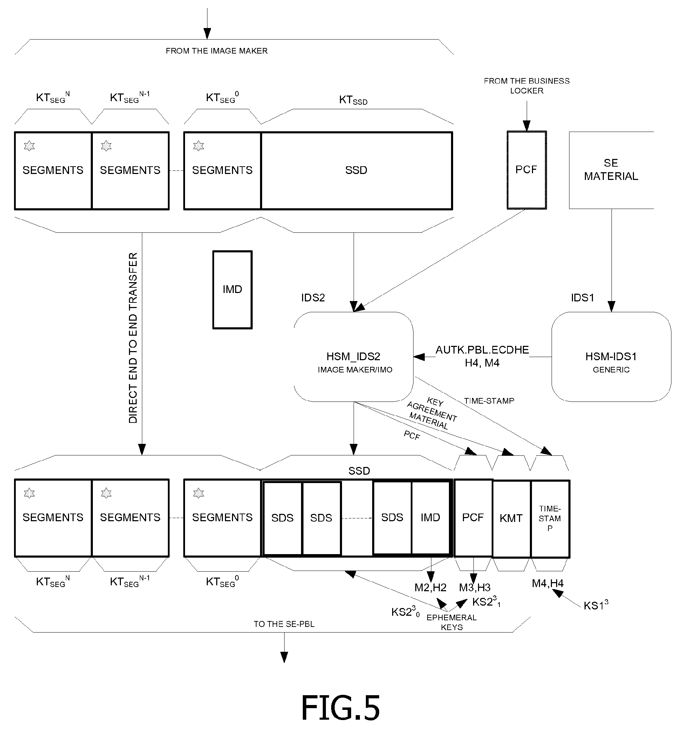

Figure 5 shows the data processing from the content party to the field party. It shows more specifically the flow between the two parties while using the ephemeral public key (encapsulated in field authentication token ATK.PBL.ECDHE) as generated by the field party and authenticated using the invention. The image from the content party has two parts:

- The SSD (Security Scheme Decriptor)
- A collection of segments

The SSD has two parts encrypted by $KS2_0^3$:

- the IMD which is a structure describing the image;

    - The number of segments
    - The operations to perform on the image
    - The public universal identifier of the image
    - The private universal identifier of the image

- the SDS (Segment Descriptor Structure) which is describing the segment to load:

    - The data segment location (memory address)
    - The length of the data segment
    - The material for decrypting and checking the integrity of the data segment.

A content IMD to be provided to the field party, and generally received from the image owner IMO, is encrypted in a step S24 using the provision session key in a cryptogram M2 with, advantageously an integrity check H2: M2,H2 = ENCRYPT($KS2_0^3$)[IMD].

As illustrated on figure 5, the content party HSM-IDS2 receives from the image owner IMO, a collection of SDS which are encrypted by using transport keys $KT_{SSD}$ as negotiated with HSM-IDS2 and re-encrypted by $KS2_0^3$. This indirection allows to perform a fast encryption of the SSD which is short comparing to the re-encryption of all data segments of the image.

The content authentication token ATK.IDS2.ECDHE is then provided to the field party in a step S25, as shown on figure 2, with the cryptogram M2 and H2 advantageously.

Once the field party get the content authentication token ATK.IDS2.ECDHE, loading operations can be performed off line any time.

According to these operations, the field party SE-PBL verifies the authenticity of the content party certificate CERT.IDS2.ECDSA by using the root certificate CERT.CI.ECDSA, verifies the content authentication token ATK.IDS2.ECDHE by using the content party certificate CERT.IDS2.ECDSA then derives a content session key $KS2^6$ from this content authentication token and its own ephemeral secret key SK.PBL.ECDHE: $KS2^6$=DERIV(SK.PBL.ECD-

HE)[ATK.IDS2.ECDHE].

It enables the field party to decrypt the content IMD: IMD,H2=DECRYPT($KS2_0^3$)[M2].

According to the general image provision principle, the server generating an image to be loaded is able to check a pre-negotiated certificate from a business locker for binding the said image with a field party. The image owner brings with the image to bind, a certificate for given profile of images, a limited time and a given part number granting the binding and then checkable by the field party.

A manifest containing a policy control function PCF certificate and granting the delegation or a PCF authentication token is retrieved from a third party server granting the delegation rights, a business locker. The PCF and the Image Owner certificates are forwarded to the content party HSM2-IDS2.

Further compliance checks are advantageously added. In particular, when a business locker is active and identified by a UUID noted UUIDL. An associated ephemeral certificate of the business locker ATK.PCF.ECDSA is, in this case, transmitted to the content party HSM2-IDS2 by the image owner IMO as illustrated on figure 1.

In this case, during the generation phase, the content party HSM2-IDS2 checks compliance of the UUIDL as extracted, if available, from the field authentication token ATK.PBL.ECDHE and of the UUIDL as extracted from the ephemeral certificate from the business locker ATK.PCF.ECDSA.

Advantageously, a certificate CERT.IMO.ECDSA of the image owner IMO is also transmitted to the content provider HSM2-IDS2 as illustrated on figure 1. This certificate is advantageously verified using the certificate issuer certificate: VERIFY(CERT.CI.ECDSA)[CERT.IMO.ECDSA].

When a business locker is active as shown on figure 5, a further cryptogram M3 is further generated by encrypting using content session key $KS2_1^3$ a business locker token which is indeed an authentication token typically comprising a policy control function PCF: M3,H3 = ENCRYPT($KS2_1^3$)[ATK.PCF.ECDSA]. The encryption of the PCF allows the confidentiality of the business rules granted to the Business Locker to an Image Owner. The image owner IMO, generally monitoring the content party HSM2-IDS2, which manages ATK.PBL.ECDSA, can detect a lock, i.e. UUIDL in ATK.PBL.ECDSA and selects the rights ATK.PCF.ECDSA signed by SK.IMOL.ECDSA as the static private key of the Business Locker.

During the loading phase, the field party can then off line perform the following verification and policy control function retrieval operations.

Using the certificate issuer certificate it can check the signature certificate from the content provider HSM2-IDS2, the nature of the certificate as defined for a content party and the authentication token/certificate of the business locker: VERIFY(CERT.CI.ECDSA)[CERT.IDS2.ECDSA], VERIFY(PK.IMOL.ECDSA)[ATK.PCF.ECDSA] where PK.IMOL.ECDSA is the static public key of the business locker.

It can further verify the content authentication token using the signature certificate from the content provider: VERIFY(CERT.IDS2.ECDSA)[AUTK.IDS2.ECDHE].

It can decrypt the cryptogram M3 using the content session key $KS2_1^3$: ATK.PCF.ECDSA, H3=DECRYPT($KS2_1^3$)[M3].

It can verify the authentication token obtained from the business locker ATK.PCF.ECDSA using the static public key (PK.IMOL.ECDSA) of the business locker, this static public key being previously stored in the field party as the lock. It enables the field party to verify the authentication token: VERIFY (PK.IMOL.ECDSA) [ATK.PCF.ECDSA).

At last, when a time stamp is used it can decrypt it using the field session key $KS1^3$ : TIME_STAMP,H4 = DECRYPT($KS1^3$)[M4]. The field party can then check time window validity of the PCF received in M3 versus the TIME_STAMP received in M4.

Finally, the SDS (Segment Descriptor Structure) are decrypted by using the key $KS2_0^3$ which contains the information for decrypting and locating the data segments into the memory of the SE-PBL field party.

Advantageously, the field party's firmware manages two memory areas: a memory area dedicated to a session associated to a given image, a memory area shared between all sessions. The shared memory area contains, in a private variable, the PK.IMOL.ECDSA public key (the lock) transferred into the shared memory during the lock of the field party from an IMOL certificate when UUIDL is blank or from the public key of the recipient in the PCF certificate if the transfer rights operation is ordered. The dedicated memory area dedicated to a session, thus to an image, contains the UUID of the image owner and the rights granted by the PCF retrieved from the PCF certificate related to any other operations.

Figure 4 gives an overview of the method of the invention comprising the successive following phases: preparation, transaction, generation, storage and loading. Generation operations are performed first at the production party and then at the content party

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## EP 3 082 356 A1

**Claims**

1. Method to transfer field party credentials appearing as randomized for preventing any data correlation and enforcing the privacy protection, to check and prove the authenticity of an ephemeral public key (PK.PBL.ECDHE) in a three secure parties (PBL,IDS1,IDS2) environment, while preserving privacy, confidentiality between the parties and within the parties and while insuring perfect forward secrecy and an indirect mutual authentication between a field party and a content party, said ephemeral public key (PK.PBL.ECDHE) being produced as part of a field generated ephemeral key pair (SK.PBL.ECDHE, PK.PBL.ECDHE) by a field party (PBL) having to prove its authenticity to a content party (IDS2) before using said ephemeral public key (PK.PBL.ECDHE) to provide a content, said authenticity being relative to a production party (IDS1), said field party and said content party having each a pair of public/secret static keys (PK.X.ECDSA,SK.X.ECDSA) for signature an associated static signature certificate (CERT.X.ECDSA) for verification, said method comprising the following steps, for the production party (IDS1) having a pair of static production key agreement keys (PK.IDS1.ECKA,SK.IDS1.ECKA) and a static production key agreement certificate (CERT.IDS1.ECKA):

   - receiving, from field party, field party's credentials comprising a cryptogram (M1,H1) including the signature static certificate of the field party (CERT.PBL.ECDSA) encrypted using an ephemeral credential session key (KS1$^3$) derived from the production static certificate for key agreement (CERT.IDS1.ECKA) and the secret ephemeral key (SK.PBL.ECDHE) and a field authentication token (ATK.PBL.ECDHE) comprising a signature using the static secret key (SK.PBL.ECDSA) of the field party (PBL) of data comprising at least the ephemeral public key (PK.PBL.ECDHE) of the field party, a transaction identifier (ID_TRANSAC) of the transaction produced by the field party (PBL) and a content identifier (CODE_M) of the content to be loaded produced by the content party (I DS2),
   - deriving an ephemeral credential session key (KS1$^3$) using the received field authentication token (ATK.PBL.ECDHE) and the production key agreement secret key (SK.IDS1.ECKA),
   - decrypting the credential cryptogram (M1) using the derived credential session key (KS1$^3$) to get the static signature certificate of the field party (CERT.PBL.ECDSA),
   - verifying the authentication token (ATK.PBL.ECDHE) using the signature certificate of the field party (CERT.PBL.ECDSA),
   - transferring, after field party's credentials check, at least said authenticated field authentication token (ATK.PBL.ECDHE) to the content party (IDS2) for further content provisioning.

2. Method according to claim 1, further comprising a step of, for said production party, transmitting to the content party, a cross-signature of the authentication token (ATK.PBL.ECDHE), by using its static signature secret key (SK.IDS1.ECDSA), and its certificate (CERT.IDS1.ECDSA) with the authentication token.

3. Method according to one of claims 1 and 2, wherein all derivations are done in key agreement domain of the production key agreement certificate (CERT.IDS1.ECKA).

4. Method according to one of preceding claims, wherein, the field party dully identified by a Part Number (PN) during its manufacturing (PBL) having a signature certificate of the part number (CERT.PN.ECDSA), the field party's credentials further comprise the part number signature certificate (CERT.PN.ECDSA) for authenticity verification of the static signature certificate of the field party (CERT.PBL.ECDSA) by the production party (IDS1).

5. Method according to claim 4, wherein said production party having preliminary received a certificate issuer certificate (CERT.CI.ECDSA), the method further comprises the step of verifying the authenticity of the part number signature certificate (CERT.PN.ECDSA) signed by a certificate issuer signature secret key (SK.CI.ECDSA) using said certificate issuer certificate (CERT.CI.ECDSA).

6. Method according to one of preceding claims, wherein, validity information for a content to be provided to the field party (SE-PBL) having to be applied, the method further comprises, for the production party, a step of encrypting such validity information (TIME_STAMP) using the credential session key (KS1$^3$) in a validity information cryptogram (M4,H4) to be transferred to the content party (HSM2-IDS2) in order for it to forward it to the field party (SE-PBL) with the content.

7. Method according to one of preceding claims, further comprising, for the field party, the preliminary steps of receiving a key agreement certificate from another party and of verifying the neutrality of the other party from which it has received it.

8. Method according to one of preceding claims, further comprising a step of, for said production party (HSM1-IDS1), providing means as a tag within its key agreement certificate (CERT.IDS1.ECKA) allowing the field party (SE-PBL) to verify it as an authentic production party.

9. Method according to one of preceding claims, further comprising a step of, for said content party (HSM2-IDS2), providing means as a tag within its static verification certificate (CERT.IDS2.ECDSA) allowing the field party (SE-PBL) to verify it as an authentic content party.

10. Method according to one of preceding claims, comprising the following preliminary steps:

   - for the production party (IDS1), transferring to the field party (PBL) the static production key agreement certificate (CERT.IDS1.ECKA) encapsulating the static production key agreement public key (PK.IDS1.ECKA),
   - for the field party:

      - deriving an ephemeral credential session key ($KS1^3$) using the received production static certificate for key agreement (CERT.IDS1.ECKA) and the secret ephemeral key (SK.PBL.ECDHE),
      - encrypting the signature static certificate of the field party (CERT.PBL.ECDSA) with the credential session key ($KS1^3$) in a credential cryptogram (M1,H1),
      - generating a field authentication token (ATK.PBL.ECDHE), said field authentication token comprising a signature using the static secret key (SK.PBL.ECDSA) of the field party (PBL) of data comprising at least the ephemeral public key (PK.PBL.ECDHE) of the field party, a transaction identifier (ID_TRANSAC) of the transaction produced by the field party (PBL) and a content identifier (CODE_M) of the content to be loaded produced by the content party (IDS2), said authentication token being transferred with the credential cryptogram as field party's credentials (CR) to the production party (IDS1).

11. Method according to one of preceding claims, comprising the following steps of use of the ephemeral public key (PK.PBL.ECDHE):

   - for the production party, transferring, after field party's credentials check, at least said field authentication token (ATK.PBL.ECDHE) to the content party (IDS2),
   - for the content party (IDS2):

      - generating an ephemeral pair of content provider keys (PK.IDS2.ECDHE, SK.IDS2.ECDHE),
      - deriving an ephemeral provision session key ($KS2^6$) using the received field authentication token (ATK.PBL.ECDHE) and the ephemeral secret content provider key (SK.IDS2.ECDHE),
      - using the ephemeral provision session key ($KS2_0^3$) to encrypt a content (IMD) to be loaded in the field party (PBL),
      - generating a content authentication token (ATK.IDS2.ECDHE) comprising a signature using the static secret key of the content party (SK.IDS2.ECDSA) of data comprising at least the ephemeral content public key (PK.IDS2.ECDHE) and the transaction identifier (ID_TRANSAC),
      - sending the encrypted content (M2,H2=ENC($KS2_0^3$)[IMD]) and the content authentication token (ATK.IDS2.ECDHE) to the field party (PBL),
      - for the field party (PBL):
      - deriving an ephemeral provision session key ($KS2_0^3$) using the content authentication token (ATK.IDS2.ECDHE) and the ephemeral secret key (SK.PBL.ECDHE),
      - decrypting the content (IMD) using the locally derived provision session key ($KS2_0^3$).

12. Method according to claim 11, wherein, a business locker being active, the method further comprises, for the content party, the step of generating a further cryptogram (M3,H3) by encrypting a business locker certificate comprising a policy control function (PCF) using content session key ($KS2_1^3$).

13. Production's party device intended to transfer field party credentials appearing as randomized for preventing any data correlation and enforcing the privacy protection, to check and prove the authenticity of an ephemeral public key (PK.PBL.ECDHE) in a three secure parties (PBL,IDS1,IDS2) environment, while preserving privacy and confidentiality between the parties according to a method according to one of claims 1 to 9, said ephemeral public key (PK.PBL.ECDHE) being produced as part of a field generated ephemeral key pair (SK.PBL.ECDHE, PK.PBL.ECDHE) by a field party (PBL) having to prove its authenticity to a content party (IDS2) before using said ephemeral public key (PK.PBL.ECDHE) to provide a content, said authenticity being relative to a production party (IDS1), said content party having a memory to store at least a pair of public/secret static keys (PK.X.ECDSA,SK.X.ECDSA) for signature an associated static signature certificate (CERT.X.ECDSA) for verification and a pair of static production key agreement keys (PK.IDS1.ECKA,SK.IDS1.ECKA) and a static production key agreement certificate (CERT.IDS1.ECKA), said production party's device comprising:

- a communication unit to receive, from field party, field party's credentials comprising a cryptogram (M1,H1) including the signature static certificate of the field party (CERT.PBL.ECDSA) encrypted using an ephemeral credential session key (KS1$^3$) derived from the production static certificate for key agreement (CERT.IDS1.ECKA) and the secret ephemeral key (SK.PBL.ECDHE) and a field authentication token (ATK.PBL.ECDHE) comprising a signature using the static secret key (SK.PBL.ECDSA) of the field party (PBL) of data comprising at least the ephemeral public key (PK.PBL.ECDHE) of the field party, a transaction identifier (ID_TRANSAC) of the transaction produced by the field party (PBL) and a content identifier (CODE_M) of the content to be loaded produced by the content party (IDS2), said communication unit being also to transfer, after field party's credentials check, at least said authenticated field authentication token (ATK.PBL.ECDHE) to the content party (IDS2) for further content provisioning,
- a derivation module to derive an ephemeral credential session key (KS1$^3$) using the received field authentication token (ATK.PBL.ECDHE) and the production key agreement secret key (SK.IDS1.ECKA),
- an encryption/decryption module to decrypt the credential cryptogram (M1,H1) using the derived credential session key (KS1$^3$) to get the static signature certificate of the field party (CERT.PBL.ECDSA),
- a verification module to verify the authentication token (ATK.PBL.ECDHE) using the signature certificate of the field party (CERT.PBL.ECDSA).

**14.** Field party's device (SE-PBL) intended to produce an ephemeral public key as part of a field generated ephemeral key pair (SK.PBL.ECDHE, PK.PBL.ECDHE) and to perform the specific steps as performed by the field party in the method of claim 10, said ephemeral public key having to be checked and authenticated according to a method of one of claims 1 to 9 in a three secure parties (PBL,IDS1,IDS2) environment, while preserving privacy and confidentiality between the parties, authenticity having to be proved to a content party (IDS2) before using said ephemeral public key (PK.PBL.ECDHE) to provide a content, said authenticity being relative to a production party (IDS1), said field party's device comprising:

- a memory to store a pair of public/secret static keys (PK.X.ECDSA,SK.X.ECDSA) for signature an associated static signature certificate (CERT.X.ECDSA) for verification,
- a key generator to generate the field generated ephemeral key pair (SK.PBL.ECDHE, PK.PBL.ECDHE)
- a signature module to produce a field authentication token (ATK.PBL.ECDHE), said field authentication token comprising a signature using the static secret key (SK.PBL.ECDSA) of the field party (PBL) of data comprising at least the ephemeral public key (PK.PBL.ECDHE) of the field party, a transaction identifier (ID_TRANSAC) of the transaction produced by the field party (PBL) and a content identifier (CODE_M) of the content to be loaded produced by the content party (IDS2),
- a derivation module to derive an ephemeral credential session key (KS1$^3$) using the received production static certificate for key agreement (CERT.IDS1.ECKA) and the secret ephemeral key (SK.PBL.ECDHE),
- an encryption/decryption module to encrypt the signature static certificate of the field party (CERT.PBL.ECDSA) with the credential session key (KS1$^3$) in a credential cryptogram (M1,H1),
- communication unit to transfer the field authentication token with the credential cryptogram as field party's credentials (CR) to the production party (IDS1).

**15.** Field party's device (SE-PBL) according to claim 14, wherein the derivation module is further adapted to derive an ephemeral provision session key (KS2$^6$) using the content authentication token (ATK.IDS2.ECDHE) and the ephemeral secret key (SK.PBL.ECDHE), and wherein the decryption/encryption module is further adapted to decrypt the content (IMD) using the locally derived provision session key (KS2$_0^3$).

**16.** Content party's device intended to use a field party's generated ephemeral public key (PK.PBL.ECDHE) for content provision by performing the specific steps as performed by the content party in the method of one of claims 11 and 12, said ephemeral public key having being checked and authenticated according to a method of one of claims 1 to 9, by a production party in a three secure parties (PBL,IDS1,IDS2) environment, while preserving privacy and confidentiality between the parties, said content party's device comprising:

- a memory to store a pair of public/secret static keys (PK.X.ECDSA,SK.X.ECDSA) for signature an associated static signature certificate (CERT.X.ECDSA) for verification,
- a communication unit to receive a field authentication token (ATK.PBL.ECDHE) from the production party and to provide encrypted content (H2,M2=ENC($KS2_0^3$)[IMD]) to the field party (PBL),
- a key generator to generate a content ephemeral key pair (PK.IDS2.ECDHE, SK.IDS2.ECDHE),
- a derivation module to derive an ephemeral provision session key ($KS2^6$) using the received field authentication token (ATK.PBL.ECDHE) and the ephemeral secret content key (SK.IDS2.ECDHE),
- an encryption/decryption module to use the ephemeral provision session key ($KS2_0^3$) to encrypt a content (IMD) to be loaded in the field party (PBL),
- a signature module to generate a content authentication token (ATK.IDS2.ECDHE) comprising a signature using the static secret key of the content party (SK.IDS2.ECDSA) of data comprising at least the ephemeral content public key (PK.IDS2.ECDHE) and the transaction identifier (ID_TRANSAC).

FIG.1

FIG.3

SE-PBL    HSM1-IDS1    HSM2-IDS2

S00
CERT.IDS1.ECKA

S01
CODE_M

ID_TRANSAC    S02

ECDHE=    S03
SK.PBL.ECDHE,PK.PBL.ECDHE

ATK.PBL.ECDHE=Sign(SK.PBL.ECDSA)    S04
[PK.PBL.ECDHE,CODE_M,ID_TRANSAC]

$KS1^3$=DERIVE[SK.PBL.ECDHE,    S05
CERT.IDS1.ECKA]

H1,M1=ENCR($KS1^3$)[CERT.PBL.ECD    S06
SA]

S07
ATK.PBL.ECDHE,H1,M1

Decrypt M1 and check H1    S10
Check ATK.PBL.ECDHE

ATK.PBL.ECDHE,
M4,H4
S20

ECDHE=
S21    SK.IDS2.ECDHE,
PK.IDS2.ECDHE

ATK.IDS2.ECDHE=
Sign(SK.IDS2.ECDSA)
S22    [PK.IDS2.ECDHE,
ID_TRANSAC]

$KS2^6$=Derive(SK.IDS2.ECDHE
S23    )[ATK.PBL.ECDHE]

H2,M2=ENCR($KS2_0^3$)[IMD]
S24

S25
ATK.IDS2.ECDHE,M2,H2

$KS2^6$=Derive(PK.PBL.ECDHE
)[ATK.IDS2.ECDHE]

IMD,H2=DECR($KS2_0^3$)[M2]

# FIG.2

**ESE**

CERT.PN.ECDSA

CERT.PBL.ECDSA     LONG TERM
                    KEYS
SK.PBL.ECDSA

**CERT.CI.ECDSA**

FROM THE
CONNECTIVITY CENTER
/
PORTAL MNO

{SK.PBL.ECDHE,PK.PBL.ECDHE}=ECDHE()
ATK.PBL.ECDHE=SIGN(SK.PBL.ECDSA)[ID_TRANSAC,PK.P
BL.ECDHE, CODE-M, $UUID_L$]

PREPARATION

VERIFY(**CERT.CI.ECDSA**)[CERT.IDS1.ECKA]
$KS1^3$=DERIVE(SK.PBL.ECDHE)[CERT.IDS1.ECKA]

$CERT.IDS_1.ECKA$

$KS1^3$        PN

M1=ENCRYPT($KS1^3$)[CERT.PBL.ECDSA]

TRANSACTION

STATE = pending

H1,M1,
ATK.PBL.ECDHE,CERT.PN.ECDSA

$KS1^3$=DERIVE(SK.IDS1.ECKA)[ATK.PBL.ECDHE]

**The session is persistent
in NVM by using a
circular buffer storage
and is referenced by
using ID_TRANSAC**

$KS1^3$

SK.PBL.ECDHE
ID_TRANSAC
STATE(pending)

CERT.PBL.ECDSA=DECRYPT($KS1^3$)[M1]

**IDS1**

**CERT.CI.ECDSA**
LONG TERM   **CERT.IDS1.ECDSA**
KEYS        **CERT.IDS1.ECKA**
            **SK.IDS1.ECDSA**
            **SK.IDS1.ECKA**

GENERATION

VERIFY(**CERT.CI.ECDSA**)[CERT.PN.ECDSA]
VERIFY(CERT.PN.ECDSA)[CERT.PBL.ECDSA]
VERIFY(CERT.PBL.ECDSA)[ATK.PBL.ECDHE]

$UUID_L$   CODE-M   PN   ID_TRANSAC

**IDS2**

LONG TERM  **CERT.CI.ECDSA**
KEYS       **CERT.IDS2.ECDSA**
           **SK.IDS2.ECDSA**

$KS2^6$=DERIVE(SK.IDS.ECDHE)[ATK.PBL.ECDHE]

{SK.IDS2.ECDHE,PK.IDS2.ECDHE}=ECDHE()

ATK.IDS2.ECDHE=SIGN(SK.IDS2.ECDSA)[PK.IDS2.ECDHE,I
D_TRANSAC]

STORAGE
FOR
LOADING

MANIFEST,
ATK.IDS2.ECDHE,
**CERT.IDS2.ECDSA,**
CERT.PCF.EDCSA
H2,M2,H3,M3,H4,M4
SDS, DATA SEGMENTS

H2,M2=ENCRYPT($KS2_0^3$)[IMD]

H3,M3=ENCRYPT($KS2_1^3$)[AUTK.PCF.ECDSA]

H4,M4=ENCRYPT($KS1^3$)[TIME_STAMP]

VERIFY(**CERT.CI.ECDSA**)[CERT.IDS2.ECDSA]
VERIFY(CERT.IDS2.ECDSA)[ATK.IDS2.ECDHE]
$KS2^6$=DERIV(SK.PBL.ECDHE)[ATK.IDS2.ECDHE]

IMD,H2=DECRYPT($KS2_0^3$)[M2]
AUTK.PCF.ECDSA,H3=DECRYPT($KS2_1^3$)[M3]
VERIFY(**PK.IMO_L.ECDSA**)[AUTK.PCF.ECDSA]
TIME_STAMP,H4=DECRYPT($KS1_1^3$)[M4]
CHECK (TIME_STAMP,PCF)
STATE = completed

# FIG.4

FROM THE IMAGE MAKER

FROM THE BUSINESS LOCKER

$KT_{SEG}^{N}$  $KT_{SEG}^{N-1}$  $KT_{SEG}^{0}$  $KT_{SSD}$

☆ SEGMENTS  ☆ SEGMENTS  ☆ SEGMENTS  SSD

PCF  SE MATERIAL

DIRECT END TO END TRANSFER

IMD

IDS2

IDS1

HSM_IDS2
IMAGE MAKER/IMO

AUTK.PBL.ECDHE
H4, M4

HSM-IDS1
GENERIC

KEY AGREEMENT MATERIAL
TIME-STAMP
PCF

SSD

☆ SEGMENTS  ☆ SEGMENTS  ☆ SEGMENTS  SDS  SDS  SDS  IMD  PCF  KMT  TIME-STAMP

$KT_{SEG}^{N}$  $KT_{SEG}^{N-1}$  $KT_{SEG}^{0}$

M2,H2  M3,H3  M4,H4

$KS2_{0}^{3}$  $KS2_{1}^{3}$  $KS1^{3}$

EPHEMERAL KEYS

TO THE SE-PBL

# FIG.5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/010720 A1 (SMITH KEELAN [CA] ET AL) 13 January 2011 (2011-01-13) * paragraphs [0085] - [0436] * * figures 1-66f * ----- | 1-16 | INV. H04W12/08 ADD. H04W12/04 H04W8/20 |
| A | TSCHOFENIG H ET AL: "A TLS/DTLS 1.2 Profile for the Internet of Things; draft-ietf-dice-profile-09.txt", A TLS/DTLS 1.2 PROFILE FOR THE INTERNET OF THINGS; DRAFT-IETF-DICE-PROFILE-09.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 January 2015 (2015-01-19), pages 1-51, XP015104078, [retrieved on 2015-01-19] * the whole document * ----- | 1-16 | |
| A | US 2012/144193 A1 (FEDRONIC D L J; LE SAINT E F) 7 June 2012 (2012-06-07) * the whole document * ----- | 1-16 | TECHNICAL FIELDS SEARCHED (IPC) H04W H04L |

The present search report has been drawn up for all claims

| Place of search | Date of completion of the search | Examiner |
|---|---|---|
| Munich | 8 August 2016 | Ghomrasseni, Z |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 30 7159

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2016

| Patent document cited in search report | | Publication date | Patent family member(s) | | Publication date |
|---|---|---|---|---|---|
| US 2011010720 | A1 | 13-01-2011 | CA | 2767721 A1 | 13-01-2011 |
| | | | CN | 102625939 A | 01-08-2012 |
| | | | EP | 2452297 A1 | 16-05-2012 |
| | | | EP | 2977941 A1 | 27-01-2016 |
| | | | JP | 5572705 B2 | 13-08-2014 |
| | | | JP | 2012532387 A | 13-12-2012 |
| | | | SG | 177596 A1 | 29-03-2012 |
| | | | US | 2011010720 A1 | 13-01-2011 |
| | | | US | 2015309921 A1 | 29-10-2015 |
| | | | WO | 2011003199 A1 | 13-01-2011 |
| US 2012144193 | A1 | 07-06-2012 | US | H2270 H1 | 05-06-2012 |
| | | | US | 2012144193 A1 | 07-06-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Federal Information Processing Standards Publication 180-3 (FIPS PUB 180-3) Secure Hash Standard (SHS),* 2008